# EUROPÄISCHE PATENTSCHRIFT

(11) **EP 2 676 345 B1**
(45) Veröffentlichungstag und Bekanntmachung des Hinweises auf die Patenterteilung: **09.09.2015**
(21) Anmeldenummer: 12704408.9
(22) Anmeldetag: 14.02.2012
(51) Int. Cl.: H02G 1/12

(54) **Vorrichtung und Verfahren zum induktiven Abisolieren von Drähten und/oder Profilen**
Device and method for inductively removing the insulation from wires and/or profiles
Dispositif et procédé de dénudage de fils et/ou de profilés par induction

(30) Priorität: 14.02.2011 DE 102011004078
(43) Veröffentlichungstag der Anmeldung: 25.12.2013
(73) Patentinhaber: Wobben Properties GmbH, 26605 Aurich (DE)
(72) Erfinder: MARYNIAK, Bernd, 19069 Seehof (DE); SAATHOFF, Timo, 26632 Ihlow (DE); FLEISCHER, Mirko, 26847 Detern (DE); CLAAßEN, Thorsten, 26409 Wittmund (DE); WAGENAAR, Carsten, 26529 Wirdum (DE)
(74) Vertreter: Eisenführ Speiser
(86) Internationale Anmeldenummer: PCT/EP2012/052453
(87) Internationale Veröffentlichungsnummer: WO 2012/110475

(56) Entgegenhaltungen:
- WO-A1-88/07431
- DE-A1-102008 043 876
- FR-A1- 2 690 015

## Beschreibung

Die vorliegende Erfindung betrifft eine Vorrichtung und ein Verfahren zum induktiven Abisolieren von Drähten und/oder Profilen.

Zum Beispiel bei der Verdrahtung eines Synchrongenerators in einer Windenergieanlage sowie an anderen Stellen in einer Windenergieanlage müssen die elektrischen Komponenten z. B. durch elektrische Kabel miteinander verbunden werden. Dies erfolgt oftmals, indem ein Leiterbündel bestehend aus einer Mehrzahl von elektrischen Drähten, die jeweils eine isolierende Lackschicht aufweisen, verwendet wird. An den Enden der Drähte muss dann die Isolationsschicht bzw. die Lackschicht entfernt werden, damit es zu einer elektrischen bzw. galvanischen Verbindung mit den jeweiligen elektrischen Elementen kommen kann. Bislang erfolgt die Abisolierung an den Enden der Drähte oder Profile mechanisch.

Als allgemeiner Stand der Technik wird auf die Dokumente DE 1 064 580 B, DE 10 2008 043 876 A1 und DE 601 28 389 T2 verwiesen.

Es ist somit eine Aufgabe der vorliegenden Erfindung, eine Vorrichtung und ein Verfahren zum Abisolieren von Drähten und/oder Profilen vorzusehen, welche eine schnelle Abisolierung mit gleichbleibender Qualität ermöglichen.

Diese Aufgabe wird durch eine Vorrichtung zur induktiven Abisolierung von Drähten gemäß Anspruch 1 sowie durch ein Verfahren zum induktiven Abisolieren von Drähten gemäß Anspruch 4 gelöst.

Somit wird eine Vorrichtung zum Abisolieren von Drähten oder Profilen mit Lack- oder Kunststoffbeschichtungen vorgesehen. Die Vorrichtung weist einen Aufnahmeabschnitt zum Aufnehmen der Enden der abzuisolierenden Drähte und/oder Profile, mindestens eine Induktionsspule im Bereich des Aufnahmeabschnitts zur induktiven Erzeugung von Wärme, um die Beschichtung der Drähte oder Profile innerhalb des Aufnahmeabschnitts zu verdampfen oder thermisch zu entfernen, und mindestens einen Absaugschlauch auf, welcher mit dem Aufnahmeabschnitt verbunden ist, zum Absaugen der verdampften oder thermisch entfernten Beschichtungen der Drähte oder Profile im Bereich des Aufnahmeabschnitts.

Mit der erfindungsgemäßen Vorrichtung können die Beschichtungen der Drähte und/oder Profile verdampft oder thermisch entfernt werden und durch den Absaugschlauch abgesaugt werden. Somit kann eine automatische Abisolierung der Drähte auf schnelle und einfache Art und Weise erfolgen.

Gemäß einem Aspekt der vorliegenden Erfindung ist ferner ein Druckluftschlauch vorgesehen, der Druckluft in den Aufnahmeabschnitt zur Kühlung der erwärmten Drahtenden und zum Entfernen der Reste der Beschichtung im Bereich des Aufnahmeabschnitts zuführt. Durch die Druckluft mit einem entsprechenden Druck werden Oberflächenspannungen erzeugt und die erwärmten Enden werden gekühlt. Ferner können damit gleichzeitig die Reste der Beschichtung im Bereich des Aufnahmeabschnitts weggepustet und durch einen Absaugschlauch entsorgt werden.

Gemäß einem weiteren Aspekt der vorliegenden Erfindung ist ein weiterer Abschnitt um die Außenwandung des Aufnahmeabschnitts herum angeordnet, so dass eine Hohlkammer zwischen der Außenwandung des Aufnahmeabschnitts und dem Abschnitt entsteht. Die Druckluft kann dabei durch diese Hohlkammer sowie durch Löcher in der Außenwandung des Aufnahmeabschnitts gedrückt bzw. gepustet werden. Die Druckluft sowie vorhandene Partikel und Gase können dann über den Absaugschlauch abgesaugt werden.

Die Erfindung betrifft ebenfalls ein Verfahren zum Abisolieren von Drähten und/oder Profilen mit Beschichtungen. Die Enden der abzuisolierenden Drähte und/oder Profile werden in einen Aufnahmeabschnitt eingeführt. Mittels mindestens einer Induktionsspule erfolgt eine induktive Erzeugung von Wärme im Bereich des Aufnahmeabschnittes, um die Isolierungen oder Beschichtungen der Drähte und/oder Profile zu verdampfen oder thermisch zu entfernen. Die verdampften Beschichtungen der Drähte im Bereich des Aufnahmeabschnittes werden durch einen Absaugschlauch abgesaugt.

Die vorliegende Erfindung betrifft ebenfalls eine Vorrichtung zum Abisolieren von Drähten und/oder Profilen mit einer Lack- oder Kunststoffbeschichtung. Die Vorrichtung weist einen Aufnahmeabschnitt zum Aufnehmen der Enden der abzuisolierenden Drähte und/oder Profile auf. Die Vorrichtung weist ferner mindestens eine Induktionsspule im Bereich des Aufnahmeabschnitts zur induktiven Erzeugung von Wärme auf, um die Beschichtung der Drähte und/oder Profile innerhalb des Aufnahmeabschnitts zu verdampfen oder thermisch zu entfernen. Die Vorrichtung weist ferner einen Absaugschlauch auf, welcher mit dem Aufnahmeabschnitt verbunden ist, zum Absaugen der verdampften oder thermisch entfernten Beschichtung der Drähte und/oder Profile im Bereich des Aufnahmeabschnitts. Die Vorrichtung weist ferner einen Druckluftschlauch zum Zuführen von Druckluft in den Aufnahmeabschnitt zum Kühlen der erwärmten Enden der Drähte und/oder Profile und zum Entfernen von Resten der Beschichtungen im Bereich des Aufnahmeabschnitts auf. Die Vorrichtung weist ferner eine Außenwandung des Aufnahmeabschnitts und einen darum angeordneten Abschnitt auf, wobei eine Hohlkammer zwischen dem Abschnitt und der Außenwandung vorgesehen ist. Der Druckluftschlauch mündet in die Hohlkammer. In der Außenwandung des Aufnahmeabschnitts sind Löcher vorgesehen, durch welche die Druckluft aus dem Druckluftschlauch strömen kann. Die Vorrichtung weist ferner Verkleinerungseinheiten auf, welche in den Aufnahmeabschnitt eingeführt werden können, um den Innendurchmesser des Aufnahmeabschnitts zu verkleinern.

Die Erfindung betrifft den Gedanken, eine Vorrichtung zum induktiven Abisolieren von Drähten und/oder Profilen vorzusehen, wobei die abzuisolierenden Enden der Drähte in die Vorrichtung eingeführt werden und Wärme induktiv (d. h. das Kupfer der Leitungen wird induktiv erwärmt) erzeugt wird, so dass die Beschichtungen der Drähte verdampfen und die Gase bzw. Dämpfe abgesaugt werden. Anschließend bzw. parallel dazu kann zur Kühlung der abisolierten Enden der Drähte und zum besseren Lösen und Entfernen von Resten auf der Oberfläche Druckluft verwendet werden. Gemäß der Erfindung kann die Vorrichtung zum Abisolieren von Drähten und/oder Profilen im Bereich einer Windenergieanlage verwendet werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Schnittansicht eines Teils der Vorrichtung zum Abisolieren von Drähten gemäß dem ersten Ausführungsbeispiel, und
- Fig. 2: zeigt eine schematische perspektivische Teilschnittansicht der Vorrichtung zum Abisolieren von Drähten gemäß dem ersten Ausführungsbeispiel.

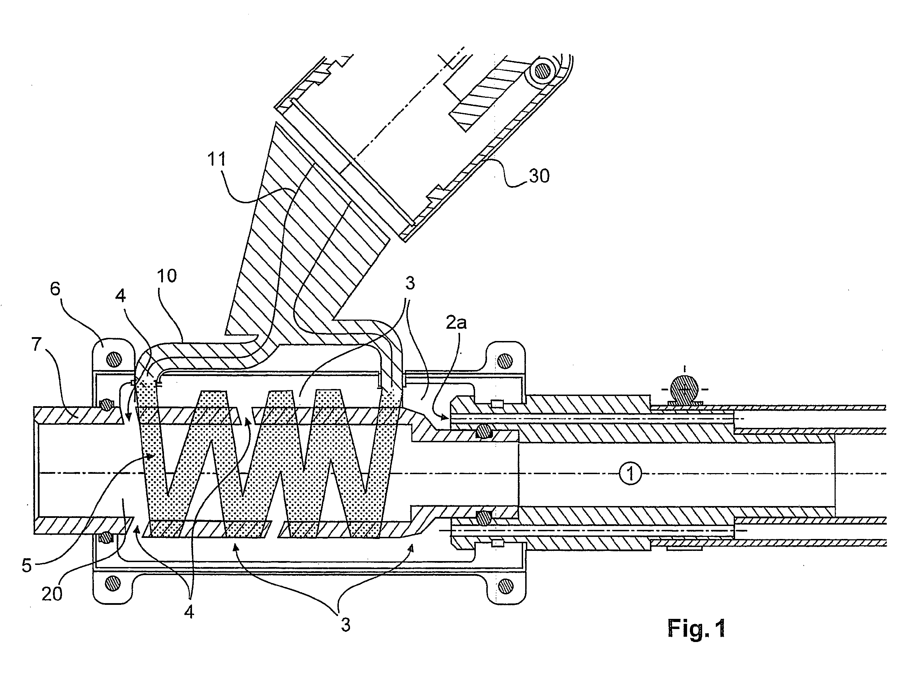

Fig. 1 zeigt eine schematische Schnittansicht eines Teils der Vorrichtung zum Abisolieren von Drähten und/oder Profilen. Die Vorrichtung weist einen Absaugschlauch 1, eine Induktionsspule 5, 10 und einen Einführabschnitt 20 zum Einführen der Enden der abzuisolierenden Drähte und/oder Profile auf. Um den Abschnitt 20 herum ist ein Rohr 7 vorgesehen, um den Induktor 10 herum sind zwei Halbschalen 6 vorgesehen. Ein zweiter Schlauch (Druckluftschlauch) 2 (z. B. um den ersten Schlauch 1 herum angeordnet) dient zum Zuführen von Druckluft (z. B. 6 - 10 bar). Zwischen der Halbschale 6 und dem Rohr 7 ist ein Hohlraum 3 vorgesehen. In dem Rohr 7 sind mehrere Durchgangsbohrungen bzw. Druckluftbohrungen 4 vorgesehen, wobei die Druckluft aus dem zweiten Schlauch (Druckluftschlauch) 2, durch den Hohlraum 3, durch die Öffnungen 4 in den Aufnahmeabschnitt 20 zur Kühlung der sich dort befindlichen Enden der Drähte geführt bzw. geblasen werden kann.

Die Anschlüsse 11 der Induktionsspule 5, 10 werden in einem Induktorabschnitt 30 geführt und können auf einem Hand-/Bedienteil vorgesehen werden, das zur Aufnahme der Zufuhrkabel dienen kann. Die Induktorspule 20 ist vorzugsweise wassergekühlt ausgestaltet. Die Induktionsspule kann an ein Handteil geschraubt werden. Die Induktionsspule kann in Abhängigkeit des Drahtquerschnittes unterschiedliche Größen aufweisen.

Die Länge des Einführabschnitts 20 kann variabel ausgestaltet sein, so dass die Länge des abzuisolierenden Bereichs der Drähte ebenfalls einstellbar ist. Ferner kann in den Einführabschnitt 20 eine Verkleinerungseinheit eingeführt werden. Diese Verkleinerungseinheit kann zum Beispiel die Form eines Hohlzylinders aufweisen, wobei in dem Hohlzylinder Öffnungen bzw. Bohrungen korrespondierend zu Öffnungen bzw. Bohrungen 4 in dem Rohr 7 vorgesehen sind. Diese Verkleinerungseinheit kann austauschbar ausgestaltet sein. Die Dicke der Wandung der Verkleinerungseinheit ist ebenfalls einstellbar bzw. es können verschiedene Verkleinerungseinheiten mit unterschiedlichen Dicken vorgesehen werden, so dass auch unterschiedlich dicke Leiterbündel in der Vorrichtung zum Abisolieren von Drähten bearbeitet werden können.

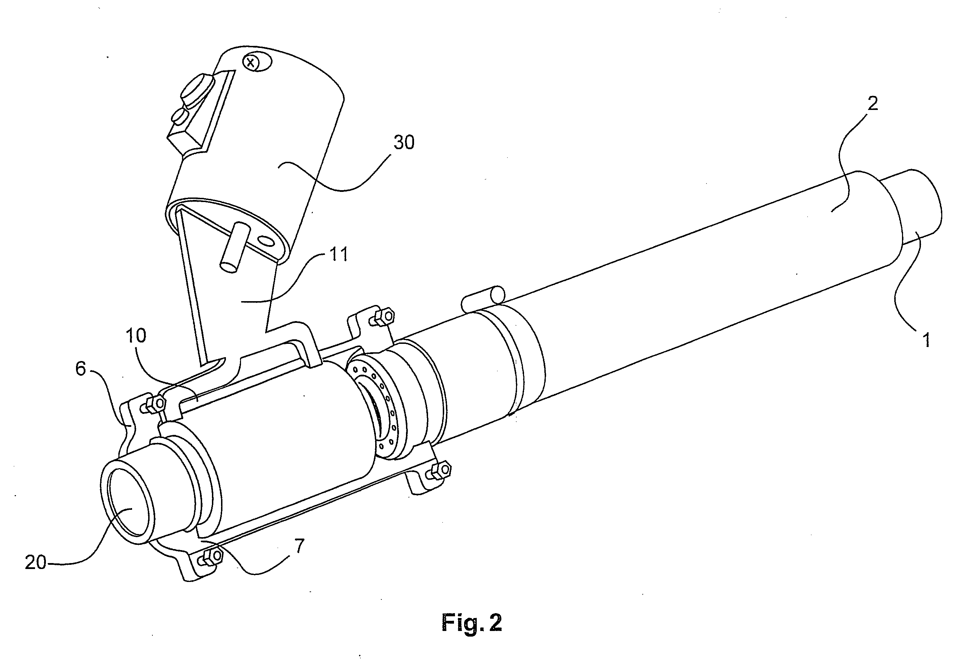

Fig. 2 zeigt eine schematische Teilschnittansicht der Vorrichtung zum Abisolieren von Drähten gemäß dem ersten Ausführungsbeispiel. Die Vorrichtung weist ein (Innen-) Rohr 7, zwei Halbschalen 6, eine (wassergekühlte) Induktionsspule 10 und einen Aufnahmeabschnitt 20 zur Aufnahme der Enden der Drähte, die abzuisolieren sind, auf. Ferner weist die Vorrichtung einen ersten Schlauch 1 zum Absaugen von Rauch, Verbrennungsresten und Dämpfen, die bei der induktiven Abisolierung der Drähte auftreten, auf. Ferner weist die Vorrichtung einen zweiten Schlauch 2 auf, welcher dazu dient, Druckluft in den Aufnahmeabschnitt 20 zuzuführen. Über Öffnungen 2a an dem Ende des zweiten Schlauches (Druckluftschlauch) 2 kann die Druckluft in eine Hohlkammer 3 zwischen der Halbschale 6 und dem Rohr 7 zugeführt werden. Von der Hohlkammer 3 aus kann die Druckluft über Öffnungen 4 in dem Rohr 7 in den Aufnahmeabschnitt 20 gelangen.

Die Anschlüsse 11 der Induktionsspule 10 führen durch den Abschnitt 30 zu der entsprechenden Spannungsversorgung. Die Wasserkühlung der Induktionsspule kann sowohl in dem Abschnitt 30 als auch innerhalb der beiden Halbschalen vorgesehen sein.

Alternativ dazu kann die Induktionsspule von innen mit Kühlwasser durchflossen werden.

Ein Bündel von Drähten, die abzuisolieren sind, wird in den Aufnahmeabschnitt 20 innerhalb des Rohres 7 eingeführt. Die Länge des Aufnahmeabschnitts 20 bzw. die Eindringtiefe des abzuisolierenden Endes der Drähte ist einstellbar. Mittels der Induktionsspule 10 wird induktive Wärme innerhalb des Aufnahmeabschnittes 20 erzeugt, so dass die Isolierungen der Drähte bzw. die Isolationslacke innerhalb dieses Abschnittes schmelzen bzw. abbrennen und verdampfen können, d. h. es kommt zu einer thermischen Entfernung der Lacke oder Beschichtungen der Drähte. Das verdampfte oder thermisch entfernte Isolationsmaterial kann über den Schlauch 1 abgesaugt werden. Nach erfolgter Abisolierung durch Verdampfen oder thermisches Entfernen des Isolationsmaterials kann mittels des zweiten Schlauches 2 und der Öffnungen 2a Druckluft in die Hohlkammer 3 eingebracht werden, welche dann durch die Öffnungen 4 in dem Rohr in dem Aufnahmeabschnitt 20 gelangt und die erwärmten Enden der Drähte abkühlen können. Die Druckluft kann dann wiederum über den ersten Schlauch 1 abgesaugt werden und kann Partikel des Isolationsmaterials absaugen.

Mit der erfindungsgemäßen Vorrichtung zum Abisolieren von Drähten kann eine einfache, schnelle und kostengünstige Möglichkeit der Abisolierung von Drähten vorgesehen werden. Die Abisolierung kann automatisch und bei gleichbleibender Qualität erfolgen. Die abzuisolierenden Drähte oder Profile können beispielsweise bei einer Verdrahtung eines Synchrongenerators z. B. für eine Windenergieanlage verwendet werden. Alternativ kann die Vorrichtung zum Abisolieren von Drähten und/oder Profilen ebenfalls zum Abisolieren von elektrischen Drähten oder elektrischen Profilen im Bereich einer Windenergieanlage verwendet werden.

Während gemäß dem Stand der Technik die Abisolierungen mechanisch erfolgen mussten, wird die Isolierung der Drähte gemäß der Erfindung durch induktive Wärme verdampft bzw. gelöst (d. h. thermisch entfernt) und die verdampften oder thermisch entfernten Partikel der Isolierungen können abgesaugt werden. Zur Kühlung der erwärmten Enden kann Druckluft verwendet werden.

Durch die erfindungsgemäße Induktionsspule 10 wird ein magnetisches Feld erzeugt, das das Kupfer des Bündels auf 800 bis 900 Grad erwärmen kann, so dass die Beschichtung verdampft oder thermisch entfernt wird.

Mit der erfindungsgemäßen Vorrichtung zum Abisolieren von Drähten kann die Zeit für die Erwärmung, das Absaugen von Rauch und verdampften Partikeln sowie der Abkühlvorgang automatisch bzw. teilautomatisiert erfolgen.

Das Beaufschlagen der abisolierten Enden der Drähte mit Druckluft ist nicht nur zum Kühlen vorteilhaft, sondern dadurch werden auch die Reste der Isolierung bzw. Lackreste in Richtung des Absaugschlauchs 1 ab- bzw. weggeblasen.

Der Erwärmprozess kann z. B. zwischen 5 und 7 Sekunden dauern, das Abblasen kann zwischen 15 und 20 Sekunden dauern. Das Absaugen von Luft durch den ersten Absaugschlauch 1 ist vorzugsweise immer aktiviert, damit keine giftigen Dämpfe austreten können.

Gemäß einem Aspekt der vorliegenden Erfindung kann eine Abdichtkappe zum Abdichten der Öffnung des Aufnahmeabschnittes vorgesehen sein, wenn die abzuisolierenden Enden eingeführt sind.

Die Vorrichtung und das Verfahren zum Abisolieren von Drähten werden erfindungsgemäß insbesondere für Generatoren- und Drosselanschlüsse in einer Windenergieanlage verwendet. Die isolierten Kupferdrähte, welche in einem Leiterbündel zusammengefasst werden, sollen in der erfindungsgemäßen Vorrichtung / dem Verfahren induktiv abisoliert werden. Die erfindungsgemäße Vorrichtung ist vorzugsweise auf einem verschiebbaren Rollwagen vorgesehen. Die Vorrichtung weist vorzugsweise einen HF-Generator auf zum Erzeugen der benötigten HF (Hochfrequenz-) Wechselspannung zum Versorgen der Induktionsspule. Der Absaugschlauch 1 ist vorzugsweise flexibel ausgestaltet, um die Handhabung der Vorrichtung zu verbessern. Ferner können optional Griffe im Bereich des Endes der Vorrichtung vorgesehen werden, an welcher die Aufnahmeeinheit vorgesehen ist.

Die Vorrichtung gemäß der Erfindung kann eine Eingabeeinheit zum Eingeben eines Programms, eines Barcodes, einer Nummer oder dergleichen aufweisen. Anhand des Barcodes, der Nummer etc. kann die Vorrichtung entsprechend gesteuert werden. Dies kann beispielsweise die Länge der Erwärmungsphase, die Länge der Abkühlungsphase, die Zeitdauer der Druckluftversorgung etc. beinhalten.

Der Abisolierbereich der abzuisolierenden Drähte kann z. B. in einem Bereich von 30 mm bis 70 mm (beispielsweise mit Einstellungsabständen von 5 mm) eingestellt werden. Im Bereich des Aufnahmeabschnitts 20 kann ein Sensor zum Erfassen eines eingeführten Drahtes vorgesehen werden. Optional kann erst nach Erfassung eines eingeführten Drahtes die Spule aktiviert werden, so dass eine Aktivierung der Spule bei einem nicht eingeführten Draht vermieden werden kann. Ferner kann die Vorrichtung optional eine Anzeigeneinheit zum Anzeigen aufweisen, ob die Drähte eingeführt sind oder nicht.

Der Abisoliervorgang (Aktivierung der Induktionsspule) kann manuell durch Betätigung eines Tasters oder automatisch erfolgen, wenn die abzuisolierenden Drähte in den Aufnahmeabschnitt eingeführt worden sind.

Die verwendeten Drähte sollten ein Isolationsmaterial bzw. einen Isolationslack bzw. -schicht aufweisen, die eine Verdampfungstemperatur aufweisen, die wesentlich niedriger als die Schmelztemperatur der verwendeten Drähte liegt.

Die Vorrichtung zum Abisolieren von Drähten und/oder Profilen gemäß dem ersten Ausführungsbeispiel kann auch dazu verwendet werden, Kabelenden, auf welche ein Kabelschuh aufgequetscht worden ist, induktiv zu erwärmen. Das induktiv erwärmte Kabelende und der Kabelschuh können dann im Bereich des induktiv erwärmten Drahtendes des Kabelschuhs verlötet werden. Die Vorrichtung gemäß dem zweiten Ausführungsbeispiel kann dabei im Wesentlichen der Vorrichtung gemäß dem ersten Ausführungsbeispiel entsprechen, so dass das zu erwärmende Kabelende mit dem darauf befestigen Kabelschuh in den Einführabschnitt 20 eingeführt wird, die Induktionsspule wird aktiviert und erwärmt somit das Kupfer in den Kabelenden. Um die Befestigung des Kabelschuhs an den Drahtenden zu verbessern, kann eine Verlötung erfolgen, wobei das Drahtende derart aufgewärmt bzw. erhitzt ist, dass die Wärme dazu ausreicht, den Lötzinn zu schmelzen, so dass der Lötzinn in den Innenbereich des Kabelschuhs hinein fließen kann und somit eine verbesserte Befestigung erfolgen kann.

Gemäß einem dritten Ausführungsbeispiel, welches es auf dem ersten oder zweiten Ausführungsbeispiel beruhen kann, weist die Vorrichtung zwei Einführeinheiten jeweils mit einer Induktionsspule auf, wobei der erste Einführabschnitt zum Abisolieren der Drähte bzw. Profile dient und der zweite Einführabschnitt zur Erwärmung der Kabelenden dient, um einen Kabelschuh am Kabelende zu verlöten. Wie in dem ersten oder zweiten Ausführungsbeispiel kann Druckluft zur Kühlung der verlöteten Draht- oder Profilenden verwendet werden. Ferner kann der beim Löten entstandene Rauch (wie die thermisch entfernten Beschichtungen) durch den oben beschriebenen Schlauch 1 abgesaugt werden.

## Patentansprüche

1. Vorrichtung zum Abisolieren von Drähten und/oder Profilen mit einer Lack- oder Kunststoffbeschichtung, mit
einem Aufnahmeabschnitt (20) zum Aufnehmen der Enden der abzuisolierenden Drähte und/oder Profile,
mindestens einer Induktionsspule (10) im Bereich des Aufnahmeabschnittes (20) zur induktiven Erzeugung von Wärme, um die Beschichtung der Drähte und/oder Profile innerhalb des Aufnahmeabschnitts (20) zu verdampfen oder thermisch zu entfernen, .wobei die Vorrichtung ist gekennzeichnet mit
mindestens einem Absaugschlauch (1), welcher mit dem Aufnahmeabschnitt (20) verbunden ist, zum Absaugen der verdampften oder thermisch entfernten Beschichtung der Drähte und/oder Profile im Bereich des Aufnahmeabschnittes (20),
einem Druckluftschlauch (2) zum Zuführen von Druckluft in den Aufnahmeabschnitt (20) zum Kühlen der erwärmten Enden der Drähte und/oder Profile und zum Entfernen von Resten der Beschichtung im Bereich des Aufnahmeabschnittes (20), wobei
Verkleinerungseinheiten in dem Aufnahmeabschnitt (20) einführbar vorgesehen sind, um den Innendurchmesser des Aufnahmeabschnittes zu verkleinern.

2. Vorrichtung nach Anspruch 1, ferner mit
einer Außenwandung (7) des Aufnahmeabschnitts (20) und einem darum angeordneten Abschnitt (6), wobei eine Hohlkammer (3) zwischen dem Abschnitt (6) und der Außenwandung (7) vorhanden ist, wobei der Druckluftschlauch (2) in der Hohlkammer (3) mündet, wobei in der Außenwandung (7) des Aufnahmeabschnittes (20) Löcher (4) vorgesehen sind, durch welche die Druckluft strömen kann.

3. Vorrichtung nach einem der Ansprüche 1 bis 2, wobei
die Länge des Aufnahmeabschnitts (20) variierbar ist.

4. Verfahren zum Abisolieren von Drähten und/oder Profilen mit Lack- oder Kunststoffbeschichtung, mit den Schritten:
Einführen der Enden der abzuisolierenden Drähte oder Profile in einen Aufnahmeabschnitt (20),
induktive Erzeugung von Wärme im Bereich des Aufnahmeabschnitts (20) durch mindestens eine Induktionsspule (10), um die Beschichtung der Drähte und/oder Profile innerhalb des Aufnahmeabschnitts (20) zu verdampfen oder thermisch zu entfernen, und
Absaugen der verdampften oder thermisch entfernten Beschichtungen der Drähte und/oder Profile im Bereich des Aufnahmeabschnitts (20) durch einen Absaugschlauch, welcher mit dem Aufnahmeabschnitt verbunden ist,
Zuführen von Druckluft in den Aufnahmeabschnitt (20) zum Kühlen der erwärmten Enden der Drähte und/oder Profile und zum Entfernen von Resten der Beschichtung im Bereich des Aufnahmeabschnittes (20),
wobei Verkleinerungseinheiten in dem Aufnahmeabschnitt (20) einführbar vorgesehen sind, um den Innendurchmesser des Aufnahmeabschnittes zu verkleinern.

## Claims

1. Device for removing insulation from wires and/or profiles with a paint or plastics coating, having
a receiving portion (20) for receiving the ends of the wires and/or profiles which are intended to have insulation removed, at least one induction coil (10) in the region of the receiving portion (20) for the inductive production of heat in order to evaporate or thermally remove the coating of the wires and/or profiles inside the receiving portion (20), wherein the device is **characterised by**
at least one suction hose (1) which is connected to the receiving portion (20) for suction of the evaporated or thermally removed coating of the wires and/or profiles in the region of the receiving portion (20),
a compressed air hose (2) for supplying compressed air to the receiving portion (20) in order to cool the heated ends of the wires and/or profiles and to remove residues of the coating in the region of the receiving portion (20), wherein reduction units are provided so as to be able to be introduced in the receiving portion (20) in order to reduce the inner diameter of the receiving portion.

2. Device according to claim 1, further having an outer wall (7) of the receiving portion (20) and a portion (6) which is arranged around it, wherein a hollow chamber (3) is provided between the portion (6) and the outer wall (7), wherein the compressed air hose (2) opens in the hollow chamber (3), wherein there are provided in the outer wall (7) of the receiving portion (20) holes (4) through which the compressed air can flow.

3. Device according to either claim 1 or claim 2, wherein the length of the receiving portion (20) can be varied.

4. Method for removing insulation from wires and/or profiles with a paint or plastics coating, having the steps of:
introducing the ends of the wires or profiles which are intended to have insulation removed into a receiving portion (20),
inductive production of heat in the region of the receiving portion (20) by means of at least one induction coil (10) in order to evaporate or thermally remove the coating of the wires and/or profiles inside the receiving portion (20), and
suction of the evaporated or thermally removed coatings of the wires and/or profiles in the region of the receiving portion (20) by means of a suction hose which is connected to the receiving portion,
supplying compressed air to the receiving portion (20) in order to cool the heated ends of the wires and/or profiles and to remove residues of the coating in the region of the receiving portion (20),
wherein reduction units are provided so as to be able to be introduced in the receiving portion (20) in order to reduce the inner diameter of the receiving portion.

## Revendications

1. Dispositif de dénudage de fils et/ou profilés à revêtement en vernis ou en plastique, avec
une section de réception (20) pour recevoir les extrémités des fils et/ou profilés à dénuder,
au moins une bobine à induction (10) dans la zone de la section de réception (20) pour la génération inductive de chaleur, afin d'évaporer ou de retirer thermiquement le revêtement des fils et/ou profilés à l'intérieur de la section de réception (20), le dispositif étant **caractérisé par**
au moins un tuyau d'aspiration (1) qui est relié à la section de réception (20) pour aspirer le revêtement des fils et/ou profilés évaporé ou retiré thermiquement dans la zone de la section de réception (20),
un tuyau d'air comprimé (2) pour amener de l'air comprimé dans la section de réception (20) pour refroidir les extrémités chauffées des fils et/ou profilés et pour retirer des résidus du revêtement dans la zone de la section de réception (20),
des unités de réduction étant prévues introductibles dans la section de réception (20) pour réduire le diamètre intérieur de la section de réception.

2. Dispositif selon la revendication 1, avec en outre
une paroi extérieure (7) de la section de réception (20) et une section (6) disposée autour, une cavité (3) étant présente entre la section (6) et la paroi extérieure (7), le tuyau d'air comprimé (2) débouchant dans la cavité (3), des trous (4) étant prévus dans la paroi extérieure (7) de la section de réception (20), par lesquels l'air comprimé peut s'écouler.

3. Dispositif selon l'une des revendications 1 à 2, la longueur de la section de réception (20) pouvant être modifiée.

4. Procédé de dénudage de fils et/ou profilés à revêtement en vernis ou en plastique, avec les étapes de :
introduction des extrémités des fils ou profilés à dénuder dans une section de réception (20),
génération inductive de chaleur dans la zone de la section de réception (20) par l'intermédiaire d'au moins une bobine à induction (10), afin d'évaporer ou de retirer thermiquement le revêtement des fils et/ou profilés à l'intérieur de la section de réception (20), et
aspiration des revêtements des fils et/ou profilés évaporés ou retirés thermiquement dans la zone de la section de réception (20), par l'intermédiaire d'un tuyau d'aspiration qui est relié à la section de réception,
amenée d'air comprimé dans la section de réception (20) pour refroidir les extrémités chauffées des fils et/ou profilés et pour retirer des résidus du revêtement dans la zone de la section de réception (20),
des unités de réduction étant prévues introductibles dans la section de réception (20) pour réduire le diamètre intérieur de la section de réception.
